# EUROPEAN PATENT SPECIFICATION

(11) **EP 3 518 397 B1**
(45) Date of publication and mention of the grant of the patent: **29.05.2024**
(21) Application number: 18185069.4
(22) Date of filing: 23.07.2018
(51) Int. Cl.: D05B 69/10

(54) **DRIVE APPARATUS FOR SEWING MACHINES**
ANTRIEBSVORRICHTUNG FÜR NÄHMASCHINEN
APPAREIL D'ENTRAÎNEMENT POUR MACHINES À COUDRE

(30) Priority: 25.01.2018 TW 107102728
(43) Date of publication of application: 31.07.2019
(73) Proprietor: H. S. Machinery Co., Ltd, 23867 New Taipei City (TW)
(72) Inventor: CHAN, Tzu San, New Taipei City 23867 (TW)
(74) Representative: Baldwin, Mark

(56) References cited:
- CN-A- 103 132 257
- CN-A- 104 033 501
- CN-U- 201 598 412
- CN-U- 201 910 703
- CN-U- 202 359 356
- CN-U- 206 015 262
- CN-U- 206 783 956
- TW-U- M 491 685
- US-B1- 6 223 740

## Description

### BACKGROUND OF THE INVENTION

### 1. Field of the Invention

The invention relates to sewing machines comprising a drive apparatus and more particularly to improving cooling of the drive apparatus or a body part of such a sewing machine.

### 2. Description of Related Art

A conventional sewing machine is activated by a motor shaft of an electric motor in cooperation with a pulley. The sewing machine can operate stably and clothing sewn by it has quality.

It is known that in a conventional heat dissipation apparatus for a sewing machine characterized by providing an electric motor on the forepart of the sewing machine, the forepart and especially the motor of a sewing machine may generate high levels of heat in operation. The motor includes a seat for mounting a rotor and a stator thereon. A hood is secured onto the seat for enclosing both the rotor and the stator. The hood has a plurality of openings and a fan is provided for drawing air through the openings to cool both the rotor and the stator. Further, the air flows to the forepart for cooling purposes. However, the air flowing into the forepart is relatively hot due to the heat absorbed as it passes through the rotor and the stator. Thus, the desired cooling of the forepart is compromised.

CN104033501 discloses a modular shaft connecting structure. The modular shaft connecting structure is provided with a first shaft connecting block, a second shaft connecting block, a connecting block and at least one shaft sleeve, wherein the first shaft connecting block is arranged on a motor rotating shaft, the second shaft connecting block is mounted on a headstock spindle of a sewing device, the connecting block is arranged between the first shaft connecting block and the second shaft connecting block in a plugged and sleeved mode, and the shaft sleeve is arranged between the second shaft connecting block and the headstock spindle in an assisted and sleeved mode. When the modular shaft connecting structure is used, the motor rotating shaft can be connected with the headstock spindle by directly arranging the second shaft connecting block on the headstock spindle in a sleeved mode or by arranging the shaft sleeve on the headstock spindle with a relatively small outer diameter in a sleeved mode and then arranging the second shaft connecting block on the shaft sleeve in a sleeved mode, and therefore the purpose that motors with the same dimensional form can be installed and used quickly corresponding to various sewing devices is achieved.

CN201910703 relates to an improvement for a radiating structure of a motor. The motor is arranged at side edge of a machine base, wherein the motor comprises a motor base body used for containing a rotor and a stator, and a motor cover arranged at one side of the motor base body; a plurality of air inlets penetrate through the motor cover corresponding positions of the rotor and the stator in the motor base body; and a radiating fan is arranged between the motor base body and the machine base.

CN201598412 discloses a power transmission structure of a sewing machine, which is mainly connected to a through hole on the side wall of the sewing machine. A set of sockets is fixed on the side of the machine. The machine has a through hole, and the other side a sleeve seat is provided with a positioning hole corresponding to the sleeve shaft, and a sleeve is provided in the positioning hole. The sleeve is fixed to the main shaft of the machine in the sleeve seat. A direct drive motor is fixed on the other side, a rotor of the direct drive motor passes through the positioning hole of the sleeve, and the shaft hole fixed to the socket of the sleeve provided on the inner side to enable the socket to pass through. The sleeve directly drives the main shaft of the machine, and the rotor of the direct drive motor can be connected to the main shaft of the machine through the socket conveniently.

CN103132257 relates to a heat dissipating method for a sewing machine with a direct-drive motor. The heat dissipating method is characterized in that an adapter seat is correspondingly connected at a power input main shaft end of the head portion of the sewing machine, thus the direct-drive motor can be arranged though the adapter seat, and the adapter seat is a seat body with suitable thickness, so that a plurality of air intake groove holes can be formed in the outer periphery of the adapter seat. Thus, by utilization of a negative pressure phenomenon generated when the motor operates to drive a fan on a main shaft to rotate, cold air around is sucked in through the air intake grooves and then guided into a machine to be used for heat dissipation of the motor and internal components of the machine body.

CN206783956 provides a sewing machine's spindle motor mounting structure belongs to sewing machine technical field. It has solved the current not good scheduling problem of sewing machine heat dissipation. This sewing machine's spindle motor mounting structure includes spindle motor, casing and main shaft, spindle motor includes the rotor, stator and magnet steel fixed disk, the rotary gap has between rotor and the stator, there is the mounting groove on the right -hand member face of casing, the right -hand member of main shaft is fixed with the rotor of motor, the stator is installed on the right -hand member face of casing, the fan is established and is fixed with to the cover on the main shaft, the fan is located the mounting groove and in the left side of rotor, still be fixed with the hand wheel on the main shaft, magnet steel fixed disk cover is established and is fixed on the main shaft, the magnet steel fixed disk is located between rotor and the hand wheel, set up the air inlet with external intercommunication on the hand wheel, the magnet steel fixed disk is provided with the ventilation hole, air inlet, the ventilation hole, rotary gap and mounting groove communicate in proper order. This sewing machine's spindle motor mounting structure has advantages such as the sewing machine of messenger radiating effect is good.

CN206015262 discloses a motor is driven in straightening of sewing machine, include: motor main body, motor shaft, sewing machine frame, main shaft, motor shaft is supported by a bearing cantilever, is equipped with at motor main body's the opening to sewing machine rack mount's installation side and covers the component, and the principal part of lid component is in order to cover motor main body the open -ended mode disposes in motor main body, and the installation department of the lid component inner peripheral surface from the periphery the that cover principal part of component along motor main body extends and forms, is formed with the through - hole on installation department and motor main body respectively, and these through - holes communicate with the position of the screw of screw towards fixing motor shaft and main shaft. According to the utility model discloses, in can sealing motor main body under the condition of the size on the width direction who maintains short motor.

CN202359356 relates to a hand wheel and fan structure of a sewing machine, which mainly adopts the structure that a hand wheel is correspondingly assembled at the rear end of a spindle of a direct drive motor for inputting power into a sewing machine station; a fan part is integrally formed at the position on the inner lateral surface of the hand wheel, which corresponds to the direct drive motor; corresponding to a shaft hole of the hand wheel, each blade in the fan part is of a radial shape in the tangential direction; each blade is at an included angle with a center point extension line; a housing is sleeved on the direct drive motor to the position of the hand wheel so as to form a guided flow passage; and therefore, guided flow cold air is sucked in by utilizing a fan formed on the hand wheel and the high temperature generated in the operating process of the direct drive motor is dissipated by the guided flow passage so as to achieve a better heat dissipation effect and ensure the service life of the direct drive motor.

TWM491685 discloses a motor support. A first support assembly hole corresponding to two or more kinds of sewing equipment is formed in one corner of a body, two or more second support assembly holes corresponding to two or more kinds of sewing equipment are formed in the diagonal portion of the first support assembly hole, and third support assembly holes corresponding to two or more kinds of sewing equipment are formed in the other two corners of the body respectively and are respectively non-perfect circular holes at least covering two hole sites. The motor support and a motor are fixed to the sewing equipment in use and located through the first support assembly hole and one second support assembly hole and are locked and fixed to the sewing equipment in use and located through the third support assembly holes, and therefore the motor support and the motor with the same dimension as the motor support can adapt to various kinds of sewing equipment.

US6,223,740 provided with a specially designed self-cooling draft inducer fan that overlies an inshot-type burner section of the furnace and is operatively supported on a heat exchanger plenum portion of the furnace housing. The fan motor is supported on an outboard housing side of the fan, and an umbrella cooling fan is coaxially secured to an outboard end of the fan drive shaft. During operation of the draft inducer fan, the umbrella fan is rotationally driven to direct a flow of ambient cooling air toward the outboard side of the draft inducer fan housing in a manner causing the air flow to sequentially contact and cool the outer shaft end bearing area, the motor windings and the inner shaft end bearing area at the outer side of the draft inducer fan housing. A baffle structure mounted on the outer draft inducer fan housing side serves to guide the cooling air flow along the inner shaft end bearing area and shield the burner flames from disruption by the cooling air flow area after it contacts the inner shaft end bearing area.

Therefore, the need for improvement still exists.

### SUMMARY OF THE INVENTION

The invention provides a sewing machine as specified in claim 1.

The invention also includes a sewing machine as specified in claim 6.

Thus, embodiments of the invention provide a drive apparatus secured, or securable, to a body part of a sewing machine, the drive apparatus comprising a housing, a rotatable sleeve carrying a rotor disposed in the housing, a stator cooperable with the rotor disposed in the housing and a first fan mounted on the sleeve The housing is provided with at least one first air inlet and a first flowpath is defined in the housing via which, in use, a first flow of air drawn into the housing by the first fan is channeled directly to the body part. Thus, the body part of the sewing machine and parts of the sewing machine located adjacent, behind or within the body part are cooled by a cooling airflow channeled directly from outside of the drive apparatus such that it does not absorb, or at least does not absorb significant amounts of, heat from parts of the drive apparatus or other parts of the sewing machine. The first flowpath is spaced from the stator and rotor. In embodiments according to the invention specified in claim 1, the first flowpath may be at least partially defined by at least one baffle provided in said housing at and end of the housing that is secured to the body part. The baffle may comprise an annular member. In embodiments according to the invention specified in claim 6, a guide member is disposed between the housing and body part to direct the first flow of air at the body part. The at least one first air inlet is defined by the guide member. The first fan is at least partially disposed in a space defined by the guide member. The guide member defines a bottom outlet via which air channeled onto the body part is exhausted to atmosphere. The drive apparatus further comprises a second fan mounted on an end of the sleeve that projects from the housing. The second fan is configured to direct a second flow of air at the housing to cool the interior of the housing, wherein the second flow of air is separate from the first flow of air. Thus, the second flow of air is independent of said first flow of air. In embodiments according to the invention specified in claim 7, the second fan is covered by a hood that is secured to housing and provided with at least one second air inlet via which the second fan draws the second flow of air into the hood. The hood and housing are configured such that the second flow of air directed at the housing passes through one or more gaps defined between the exterior of the housing and hood, whereby the interior of the housing is cooled by air passing over the exterior of the housing.

The invention provides at least one of the following advantages and benefits when compared with the conventional art: two independent air flow paths are created for dissipating heat generated in sewing operation. Hot air is expelled directly rather than further flowing through the forepart, thereby increasing the heat dissipation efficiency of the motor and the forepart.

### BRIEF DESCRIPTION OF THE DRAWINGS

FIG. 1 is a perspective view of a drive apparatus for a sewing machine according to a first embodiment of the invention;
FIG. 2 is an exploded view of FIG. 1;
FIG. 3 is a longitudinal sectional view of the drive apparatus of FIG. 1;
FIG. 4 is a perspective view of a drive apparatus for a sewing machine according to a second embodiment of the invention;
FIG. 5 is an exploded view of FIG. 4; and
FIG. 6 is a longitudinal sectional view of the drive apparatus of FIG. 4.

### DETAILED DESCRIPTION

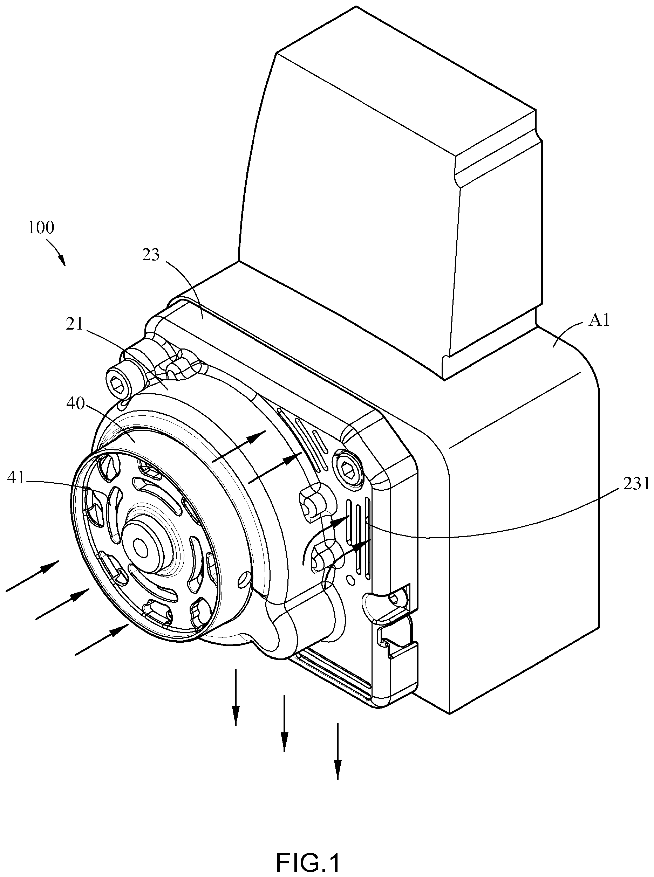

Referring to FIGS. 1 to 3, a drive apparatus 100 for a sewing machine is shown mounted to a body part A1 of a sewing machine. Although not essential, the body part may be a forepart A1 of a sewing machine. The forepart A1 includes a cavity A12. An extension shaft A11 projects from the cavity A12 and there is an outlet A13 from the cavity disposed at the lowermost end of the cavity, or base, of the forepart A1.

The drive apparatus 100 comprises a rotatable sleeve 10 directly secured to the extension shaft A11 to be rotatable with the extension shaft A11, a rotor 11 provided on the sleeve and a first fan 12 mounted on the sleeve 10 such that it is spaced from the rotor 11. The first fan 12 may be at least substantially disposed in the cavity A12.

The drive apparatus100 further comprises a housing 20 comprising a main body portion 21 that defines a chamber that is open at one end to receive a stator set 22. The housing 20 further comprises a flange portion 23 connected with the main body portion 21 by a joining portion of the flange portion 23.

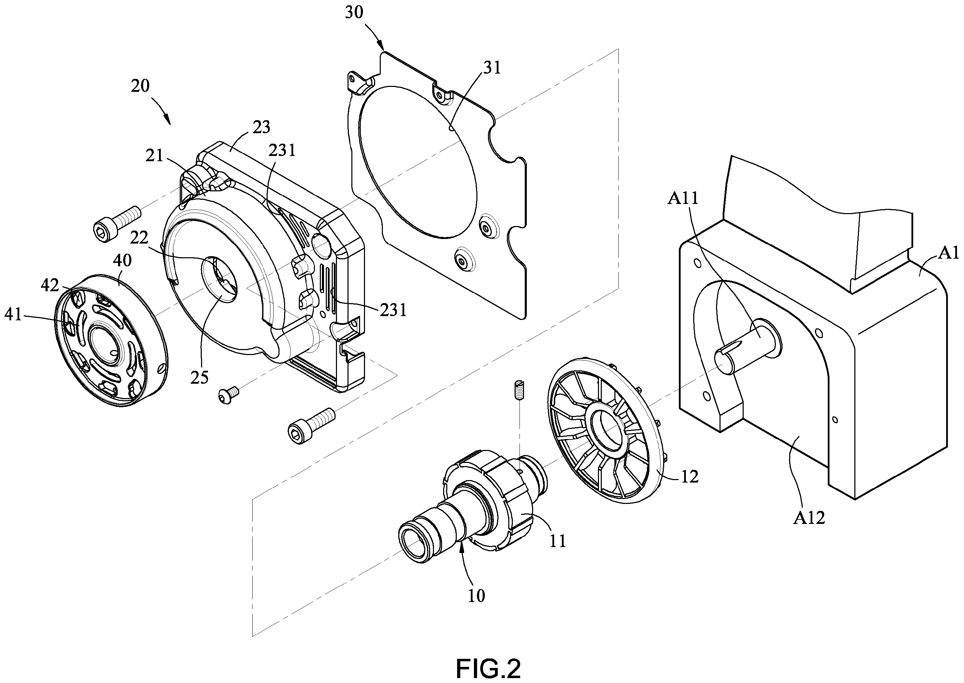

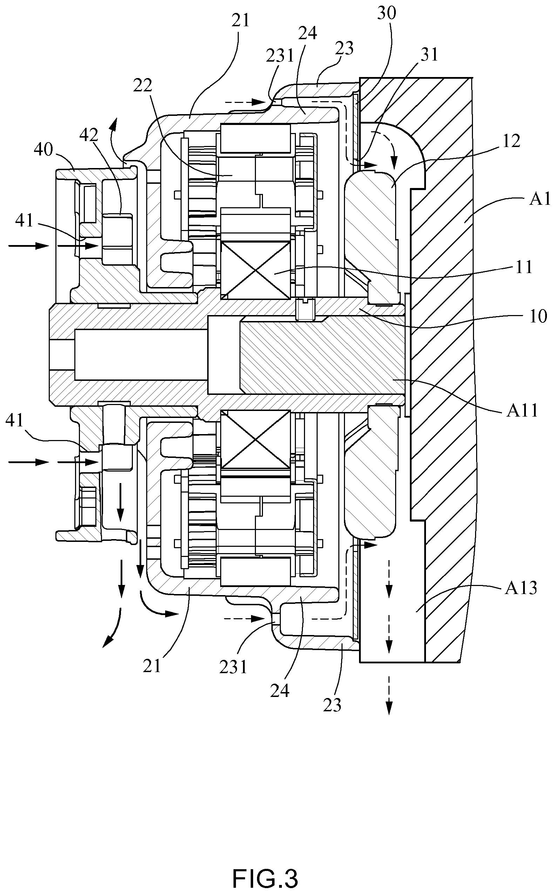

As shown in FIGS. 2 and 3, the flange portion 23 is located at the open end of the chamber proximate the forepart A1. The flange portion 23 may have a plurality of first air inlets 231 provided on the joining portion of the flange portion 23.

As shown in FIG. 3, the main body portion 21 has an annular element, or a baffle, 24 projecting from the open end of the chamber into a space, or opening, defined by the flange portion 23. A gap is defined between the flange portion 23 and the annular element 24 to provide a flowpath for air drawn through the first air inlets 231 by the first fan 12.

The main body portion 21 further comprises an axially extending passage 25 disposed at a closed end thereof, which defines a closed side of the housing 20. When assembled, the free end of the sleeve 10 extends through the passage 25 and the rotor 11 is seated on the sleeve 10 surrounded by the stator set 22 in the chamber in the main body portion 21.

The drive apparatus 100 further comprises a guide plate 30 fastened between the flange portion 23 and the forepart A1. The guide plate 30 has an opening 31 in flow communication with the chamber defined by the main body portion 21. The first fan 12 is at least partially disposed in the opening 31 between the guide plate 30 and sleeve 10.

In use, air drawn through the first air inlets 231 by the first fan 12 goes through the gap between the annular element 24 and the flange portion 23 into the opening 31 so that a concentrated cooling airflow is directed at the forepart A1. The air heated by the forepart is then exhausted via the outlet A13 of the forepart A1. Thus, a cooling airflow is channeled directly from outside of the drive apparatus to cool the forepart A1 of the sewing machine and parts of the sewing machine, or housed behind, adjacent or within the forepart.

The drive apparatus further comprises a wheel 40 fastened on the free end of the sleeve 10 externally of the housing 20. The wheel 40 is provided with a plurality of second air inlets 41 and second fan 42 disposed between the wheel 40 and main body portion 21.

Due to the interaction of the rotor 11 and the stator set 22, both the first and second fans 12, 42 rotate jointly with the sleeve 10. In use, the second fan 42 draws air into the wheel 40 through the second inlets 41. This airflow is separate from the airflow drawn through the first inlets 231 by the first fan 12. The airflow provided by the second fan 42 is used to cool the housing 20 and elements contained (for example the rotor and stator) therein. The airflow drawn through the second inlets 41 is forced through a gap between the wheel 40 and housing 20 after cooling the housing.

As a result of arranging the first inlets 231 and the second inlets 41 on the flange portion 23 and the wheel 40 respectively, two independent airflow paths are created for cooling the forepart A1 and the housing 20 (and so elements in the housing) respectively. After cooling, the airflows are respectively exhausted via the outlet A13 and the gap mentioned above to dissipate heat independently. In addition, the airflow cooling the housing 20 is exhausted from the gap rather than flowing through to the forepart A11, thereby improving the path of the airflow to increase the heat dissipation efficiency of the sewing machine.

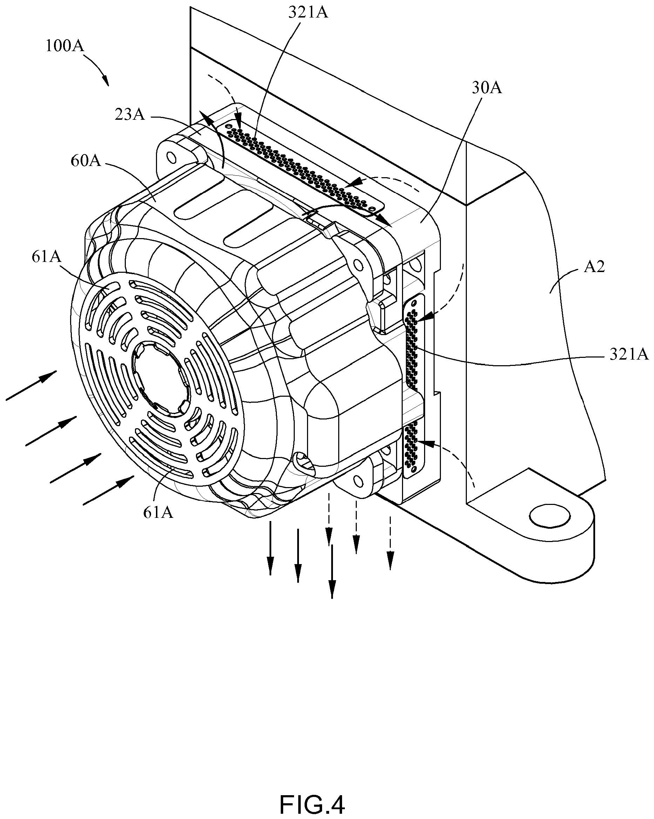

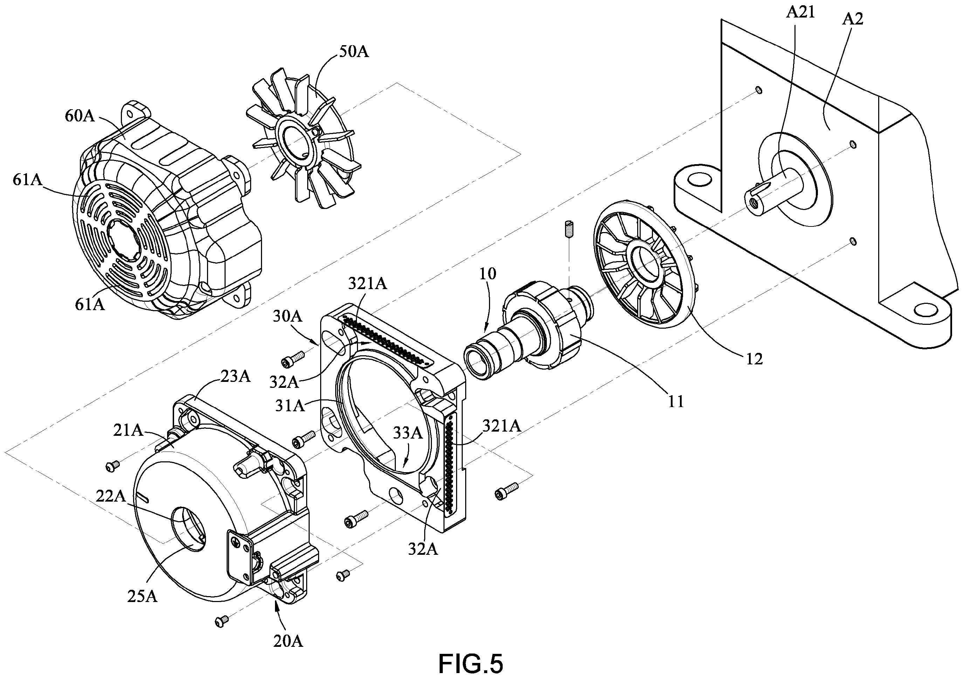

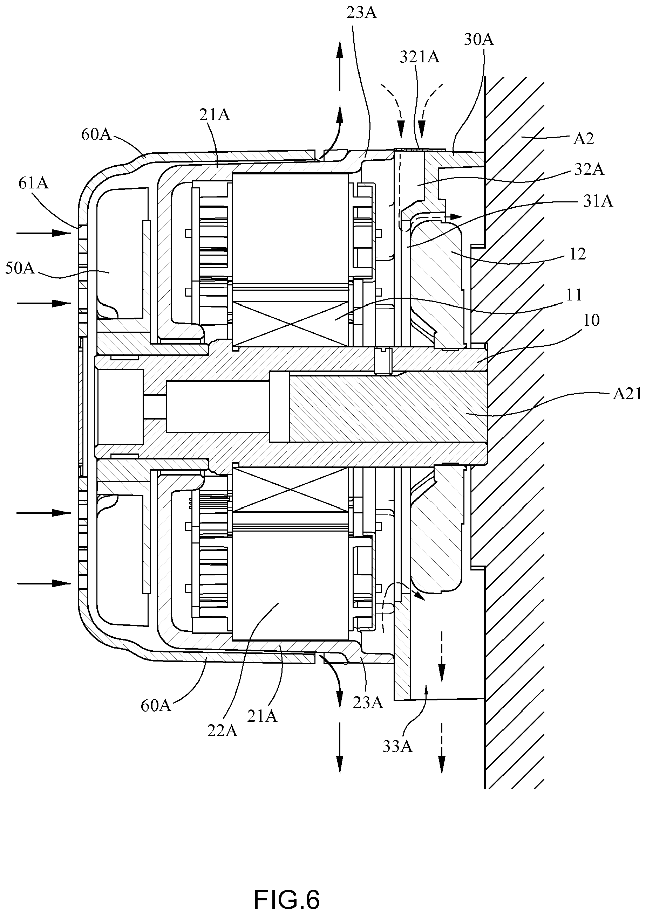

Referring to FIGS. 4 to 6, a drive apparatus 100A for a sewing machine in accordance with a second embodiment of the invention is shown mounted to a body part A2 of a sewing machine. Although not essential, the body part may be a forepart A2 of the sewing machine. An extension shaft A21 projects from a generally flat outer surface of the forepart A2.

The drive apparatus 100A includes a rotabtable sleeve 10 directly secured to the extension shaft A21, a rotor 11 provided on the sleeve and a first fan 12 mounted on the sleeve 10 such that it is spaced from both the rotor 11 and the forepart A2.

The drive apparatus 100A further comprises a housing 20A comprising a main body portion 21A that defines a chamber that is open at one end. A stator set 22 is housed in the chamber. The housing 20A further comprises a flange portion 23A connected with the main body portion 21A at the open end of the chamber proximate the forepart A2 so as to partially cover the forepart A2.

The main body portion 21A of the housing 20A further comprises an axially extending passage 25A at the closed end thereof opposite the open end of the chamber. When assembled, the sleeve 10 extends through the passage 25A and the rotor 11 provided on the sleeve 10 is surrounded by the stator set 22A in the chamber.

The drive apparatus 100A further comprises a guide member 30A fastened to the forepart A2, between the forepart and the flange portion 23A. The guide member 30A includes an opening 31A connecting to the interior of the chamber in the main body portion 21A. The guide member 30A also includes two first air inlets 32A and an outlet 33A at the bottom, or base, of the guide member 30A. The first air inlets 32A may be defined in respective recesses provided in one or more sides of the flange portion 23A. Each first air inlet 32A extends from the periphery of the opening 31A to a side of the guide member 30A. The recesses may be covered by a plate 321A that includes a plurality of air holes through which air can flow into the first air inlets.

In use, air is drawn through the air holes and the first air inlets 32A from outside the guide member 30A. The incoming airflow is guided through the opening 31A to cool the forepart A2 directly and is exhausted via the outlet 33A of the guide member 30A. Thus, a cooling airflow is channeled directly from outside of the drive apparatus to cool the forepart A2 of the sewing machine and parts of the sewing machine, or housed behind, adjacent or within the forepart.

The plates 321A may be removed, or omitted altogether, so that air can pass directly into the first air inlets 32A. Thus, users may selectively cover the first air inlets 32A with the plates 321A, if desired, or necessary.

The drive apparatus 100A further comprises a second fan 50A rotatably mounted on the free end of the sleeve 10 that projects from the passage 25A and a hood 60A that is mounted on the housing 20A to cover the main body portion 21A and the second fan 50A. The hood 60A includes a plurality of second air inlets 61A through which, in use, air flows into the hood.

Due to the interaction of the rotor 11 and the stator set 22A, both the first and second fans 12, 50A rotate jointly with the sleeve 10. In use, the second fan 50A draws air into the hood 60A through the second air inlets 61A to cool the housing 20A and elements (for example the rotor and stator) therein. The thus heated air exits the hood 60A via a gap between the hood and housing 20A after cooling the housing and its interior.

As a result of arranging two independent air entry positions as defined by the first air inlets 32A and the second air inlets 61A, two independent airflow paths are created to provide respective airflows to cool the forepart A2 and the housing 20A and elements housed therein. After cooling, the respective airflows exit via the outlet 33A of the guide member 30A and the gap mentioned above respectively to dissipate heat independently, so that the hot air is expelled directly after cooling, rather than channeled through other parts, or areas, of the sewing machine. Thus, the airflow that cools the housing 20A is exhausted from the gap rather than further flowing through the forepart A21, thereby increasing the heat dissipation efficiency of the sewing machine.

Similarly, air drawn through the plates 321A above the first air inlets 32A and the annular gap between the first fan 12 and the periphery of the opening 31A is exhausted directly through the outlet 33A.

While the invention has been described in terms of preferred embodiments, those skilled in the art will recognise that the invention can be practiced with modifications within the scope of the appended claims.

## Claims

1. A sewing machine comprising a body part (A1) and a drive apparatus comprising:
a rotatable sleeve (10) that in use is secured to an extension shaft (A11) of the sewing machine and a first fan (12) mounted on said sleeve;
a rotor (11) carried by said rotatable sleeve (10);
a housing (20) comprising a main body portion (21) defining a chamber and including an axially extending passage (25) disposed at a closed end thereof through which the sleeve extends and a plurality of first air inlets (231);
a guide plate (30) that in use is disposed between an open end of the housing (20) and a body part (A1) of the sewing machine to which the housing (20) is secured, the guide plate (30) including an opening (31) in flow communication with said chamber and the first fan (12) being at least partially disposed in the opening (31) between the guide plate (30) and sleeve (10); and
a wheel (40) fastened on the sleeve (10) and including a plurality of second air inlets (41) and a second fan (42) facing the closed end of the main body portion (21),
wherein the arrangement is such that, in use, a first airflow drawn through the first air inlets (231) by said first fan (12) passes through the opening (31) of the guide plate (30) and said opening (31) is configured to direct the first airflow outwardly with respect to said chamber onto said body part (A1) and a second airflow is drawn through the second air inlets (41) by said second fan (42) to cool the housing (20) and the interior of said housing (20),
wherein said second airflow is separate from said first airflow, and
wherein the body part (A1) includes a cavity (A12) and an outlet (A13) at a bottom of the cavity (A12) via which said air directed onto said body part is exhausted from said cavity (A12).

2. The sewing machine of claim 1, wherein the housing (20) further comprises a main body portion (21) and a flange portion (23) connected to an open end of the main body portion (21) proximate the body part (A1), wherein the first air inlets (231) are provided on a joining portion of the flange portion (23) that connects to said main body portion (21).

3. The sewing machine of claim 1, wherein the housing (20) further comprises a main body portion (21), a flange portion (23) connected to an open end of the main body portion (21) proximate the body part (A1) and an annular element (24) projecting from the main body portion (21) into a space defined by the flange portion (23), wherein said air drawn through said first air inlets (231) is channeled through a gap between the annular element (24) and the flange portion (23) towards said opening (31).

4. The sewing machine of any one of the preceding claims, wherein the wheel (40) is spaced from the housing (20) to define a gap through which said air drawn through said second air inlets (41) is channeled to flow over the housing to at least partially cool the interior of the housing.

5. The sewing machine of any one of the preceding claims, wherein the second fan (42) is integrally formed with the wheel (40).

6. A sewing machine having a drive apparatus comprising:
a rotatable sleeve (10) that in use is secured to an extension shaft (A21) of the sewing machine and a first fan (12) mounted on said sleeve;
a rotor (11) carried by said rotatable sleeve (10);
a housing (20A) comprising a main body portion (21) that defines a chamber and includes an axially extending passage (25A) disposed at a closed end thereof through which the sleeve (10) extends;
a guide member (30A) that is use is fastened to a body part (A2) of the sewing machine such that it is between said housing (20A) and said body part (A2), said guide member having an opening (31A) connecting to the interior of said chamber in the main body, a bottom outlet (33A) and at least one first air inlet port (32A); and
a second fan (50A) mounted on a free end of said sleeve (10) that projects from said housing (20A) so that said second fan (50A) is disposed externally of said housing (20A) and a hood (60A) covering said second fan (50A) and provided with a plurality of second air inlets (61A),
wherein the first fan is at least partially disposed in a space defined by the guide member (30A) and the arrangement is such that, in use, a first airflow drawn through the at least one first air inlet port (32A) by said first fan (12) passes through the opening (31A) to cool the body part (A2) and is exhausted via the bottom outlet (33A) and a second airflow drawn through the second air inlets (61A) by said second fan (50A) is directed at said housing (20A) to cool the interior of the housing (20A), and
wherein said second airflow is separate from said first airflow.

7. The sewing machine of claim 6, wherein the at least one first air inlet port (32A) of the guide member (30A) is covered by a plate (321A) and said plate (321A) includes a plurality of air holes arranged such that said air drawn through said at least one first air inlet port (32A) first passes through the air holes.

8. The sewing machine of claim 8, wherein the at least one first air inlet (32A) comprises an air inlet defined in a recess in a side of the guide member (30A) and said plate (321A) covers said air inlet.

9. The drive apparatus of claim 6, 7 or 8, wherein the hood (60A) and housing (20A) are configured to provide a gap between the housing (20A) and the hood (60A) whereby, in use, said second airflow drawn through said second air inlets (61A) by said second fan (50A) can flow over the exterior of said housing (20A) to at least partially cool the interior of the housing (20A).

## Patentansprüche

1. Nähmaschine mit einem Körperteil (A1) und einer Antriebsvorrichtung, die Folgendes umfasst:
eine drehbare Hülse (10), die beim Gebrauch an einer Verlängerungswelle (A11) der Nähmaschine befestigt ist, und ein an der genannten Hülse montiertes erstes Gebläse (12);
einen Rotor (11), der von der genannten drehbaren Hülse (10) getragen wird;
ein Gehäuse (20), das einen Hauptkörperabschnitt (21), der eine Kammer definiert und einen an einem geschlossenen Ende davon angeordneten, sich axial erstreckenden Durchgang (25) aufweist, durch den sich die Hülse erstreckt, und eine Mehrzahl von ersten Lufteinlässen (231) aufweist;
eine Führungsplatte (30), die beim Gebrauch zwischen einem offenen Ende des Gehäuses (20) und einem Körperteil (A1) der Nähmaschine angeordnet ist, an dem das Gehäuse (20) befestigt ist, wobei die Führungsplatte (30) eine Öffnung (31) in Strömungsverbindung mit der genannten Kammer aufweist und das erste Gebläse (12) zumindest teilweise in der Öffnung (31) zwischen der Führungsplatte (30) und der Hülse (10) angeordnet ist; und
ein Rad (40), das an der Hülse (10) befestigt ist und eine Mehrzahl von zweiten Lufteinlässen (41) und ein zweites Gebläse (42) aufweist, das dem geschlossenen Ende des Hauptkörperabschnitts (21) zugewandt ist,
wobei die Anordnung derart ist, dass beim Gebrauch ein von dem genannten ersten Gebläse (12) durch die ersten Lufteinlässe (231) angesaugter erster Luftstrom durch die Öffnung (31) der Führungsplatte (30) passiert und die genannte Öffnung (31) zum Richten des ersten Luftstroms in Bezug auf die genannte Kammer nach außen auf den genannten Körperteil (A1) konfiguriert ist, und ein zweiter Luftstrom von dem genannten zweiten Gebläse (42) durch die zweiten Lufteinlässe (41) angesaugt wird, um das Gehäuse (20) und das Innere des genannten Gehäuses (20) zu kühlen:
wobei der genannte zweite Luftstrom von dem genannten ersten Luftstrom getrennt ist, und
wobei der Körperteil (A1) einen Hohlraum (A12) und einen Auslass (A13) an einem Boden des Hohlraums (A12) aufweist, über den die auf den genannten Körperteil gerichtete Luft aus dem genannten Hohlraum (A12) abgelassen wird.

2. Nähmaschine nach Anspruch 1, wobei das Gehäuse (20) ferner einen Hauptkörperabschnitt (21) und einen Flanschabschnitt (23) aufweist, der mit einem offenen Ende des Hauptkörperabschnitts (21) in der Nähe des Körperteils (A1) verbunden ist, wobei die ersten Lufteinlässe (231) an einem Verbindungsabschnitt des Flanschabschnitts (23) vorgesehen sind, der mit dem genannten Hauptkörperabschnitt (21) verbunden ist.

3. Nähmaschine nach Anspruch 1, wobei das Gehäuse (20) ferner einen Hauptkörperabschnitt (21), einen mit einem offenen Ende des Hauptkörperabschnitts (21) in der Nähe des Körperteils (A1) verbundenen Flanschabschnitt (23) und ein ringförmiges Element (24) umfasst, das vom Hauptkörperabschnitt (21) in einen durch den Flanschabschnitt (23) definierten Raum hineinragt, wobei die durch die genannten ersten Lufteinlässe (231) angesaugte Luft durch einen Spalt zwischen dem ringförmigen Element (24) und dem Flanschabschnitt (23) zu der genannten Öffnung (31) hin gelenkt wird.

4. Nähmaschine nach einem der vorherigen Ansprüche, wobei das Rad (40) vom Gehäuse (20) beabstandet ist, um einen Spalt zu definieren, durch den die durch die genannten zweiten Lufteinlässe (41) angesaugte Luft gelenkt wird, so dass sie über das Gehäuse strömt und das Innere des Gehäuses zumindest teilweise kühlt.

5. Nähmaschine nach einem der vorherigen Ansprüche, wobei das zweite Gebläse (42) einstückig mit dem Rad (40) ausgebildet ist.

6. Nähmaschine mit einer Antriebsvorrichtung, die Folgendes umfasst:
eine drehbare Hülse (10), die beim Gebrauch an einer Verlängerungswelle (A21) der Nähmaschine befestigt ist, und ein an der genannten Hülse montiertes erstes Gebläse (12);
einen Rotor (11), der von der genannten drehbaren Hülse (10) getragen wird;
ein Gehäuse (20A) mit einem Hauptkörperabschnitt (21), der eine Kammer definiert und einen an einem geschlossenen Ende davon angeordneten, sich axial erstreckenden Durchgang (25A) aufweist, durch den sich die Hülse (10) erstreckt;
ein Führungselement (30A), das an einem Körperteil (A2) der Nähmaschine befestigt ist, so dass es sich zwischen dem genannten Gehäuse (20A) und dem genannten Körperteil (A2) befindet, wobei das genannte Führungselement eine mit dem Inneren der genannten Kammer im Hauptkörper verbundene Öffnung (31A), einen Bodenauslass (33A) und mindestens eine erste Lufteinlassöffnung (32A) aufweist; und
ein zweites Gebläse (50A), das an einem freien Ende der genannten Hülse (10) montiert ist, das aus dem genannten Gehäuse (20A) herausragt, so dass das genannte zweite Gebläse (50A) außerhalb des genannten Gehäuses (20A) angeordnet ist, und eine Haube (60A), die das genannte zweite Gebläse (50A) abdeckt und mit einer Mehrzahl von zweiten Lufteinlässen (61A) versehen ist,
wobei das erste Gebläse zumindest teilweise in einem Raum angeordnet ist, der durch das Führungselement (30A) definiert ist, und die Anordnung derart ist, dass beim Gebrauch ein von dem genannten ersten Gebläse (12) durch die mindestens eine erste Lufteinlassöffnung (32A) angesaugter erster Luftstrom durch die Öffnung (31A) passiert, um das Körperteil (A2) zu kühlen, und über den Bodenauslass (33A) abgelassen wird, und ein von dem genannten zweiten Gebläse (50A) durch die zweiten Lufteinlässe (61A) angesaugter zweiter Luftstrom auf das genannte Gehäuse (20A) gerichtet wird, um das Innere des Gehäuses (20A) zu kühlen, und
wobei der genannte zweite Luftstrom von dem genannten ersten Luftstrom getrennt ist.

7. Nähmaschine nach Anspruch 6, wobei die mindestens eine erste Lufteinlassöffnung (32A) des Führungselements (30A) durch eine Platte (321A) abgedeckt ist und die genannte Platte (321A) eine Mehrzahl von Luftlöchern aufweist, die so angeordnet sind, dass die durch die genannte mindestens eine erste Lufteinlassöffnung (32A) angesaugte Luft zunächst durch die Luftlöcher passiert.

8. Nähmaschine nach Anspruch 8, wobei der mindestens eine erste Lufteinlass (32A) einen Lufteinlass aufweist, der in einer Ausnehmung in einer Seite des Führungselements (30A) definiert ist, und die genannte Platte (321A) den genannten Lufteinlass abdeckt.

9. Antriebsvorrichtung nach Anspruch 6, 7 oder 8, wobei die Haube (60A) und das Gehäuse (20A) so konfiguriert sind, dass sie einen Spalt zwischen dem Gehäuse (20A) und der Haube (60A) bereitstellen, wodurch beim Gebrauch der von dem genannten zweiten Gebläse (50A) durch die zweiten Lufteinlässe (61A) angesaugte zweite Luftstrom über die Außenseite des genannten Gehäuses (20A) strömen kann, um das Innere des Gehäuses (20A) zumindest teilweise zu kühlen.

## Revendications

1. Machine à coudre comprenant une partie de corps (A1) et un appareil d'entraînement comportant un manchon rotatif (10) qui, en cours d'utilisation, est assujetti à un arbre d'extension (A11) de la machine à coudre et un premier ventilateur (12) situé sur ledit manchon ;
un rotor (11) que supporte ledit manchon rotatif (10) ;
un boîtier (20) comprenant une partie du corps principal (21) définissant une chambre et comportant un passage s'étendant axialement (25) situé au niveau d'une extrémité fermée de celui-ci, à travers lequel s'étend le manchon et une pluralité de premières entrées d'air (231) ;
une plaque de guidage (30) qui, en cours d'utilisation, est située entre une extrémité ouverte du boîtier (20) et une partie du corps (A1)de la machine à coudre à laquelle est assujetti le boîtier (20), la plaque de guidage (30) comportant une ouverture (31) en communication d'écoulement avec ladite chambre et le premier ventilateur (12) étant au moins en partie situé dans l'ouverture (31) entre la plaque de guidage (30) et le manchon (10) ; et
une roue (40) assujettie au manchon (10) et comportant une pluralité de deuxièmes entrées d'air (41) et un second ventilateur (42) du côté de l'extrémité fermée de la partie du corps principal (21),
dans lequel l'agencement est tel que, en cours d'utilisation, un premier débit d'air aspiré à travers les premières entrées d'air (231) par ledit premier ventilateur (12) passe par l'ouverture (31) de la plaque de guidage (30) et ladite ouverture (31) est configurée de sorte à diriger le premier débit d'air vers l'extérieur par rapport à ladite chambre dans ladite partie du corps (A1) et un second débit d'air est aspiré à travers les deuxièmes entrées d'air (41) par ledit second ventilateur (42) pour refroidir le boîtier (20) et la partie interne dudit boîtier (20),
dans lequel le second débit d'air est séparé dudit premier débit d'air, et dans lequel la partie du corps (A1) comporte une cavité (A12) et une sortie (A13) en partie inférieure de la cavité (A12) à travers laquelle ledit air dirigé dans ladite partie du corps est expulsé de ladite cavité (A12).

2. Machine à coudre selon la revendication 1, dans lequel le boîtier (20) comprend en outre une partie du corps principal (21) et une partie de bride (23) reliée à une extrémité ouverte de la partie du corps principal (21) à proximité de la partie du corps (A1), dans lequel les premières entrées d'air (231) sont situées sur une partie jointive de la partie de bride (23) qui relie à ladite partie du corps principal (21).

3. Machine à coudre selon la revendication 1, dans lequel le boîtier (20) comprend en outre une partie du corps principal (21), une partie de bride (23) reliée à une extrémité ouverte de la partie du corps principal (21) à proximité de la partie du corps (A1) et un élément annulaire (24) se projetant de la partie du corps principal (21) dans un espace que définit la partie de bride (23), dans lequel ledit air aspiré à travers lesdites premières entrées d'air (231) est acheminé à travers un espace prévu entre l'élément annulaire (24) et la partie de bride (23) vers ladite ouverture (31).

4. Machine à coudre selon l'une quelconque des revendications précédentes, dans lequel la roue (40) est espacée du boîtier (20) pour définir un espace à travers lequel ledit air aspiré à travers lesdites deuxièmes entrées d'air (41) est acheminé de sorte à circuler sur le boîtier pour au moins en partie refroidir la partie interne du boîtier.

5. Machine à coudre selon l'une quelconque des revendications précédentes, dans lequel le deuxième ventilateur (42) est intégralement associé à la roue (40).

6. Machine à coudre dotée d'un appareil d'entraînement comprenant :
un manchon rotatif (10) qui, en cours d'utilisation, est assujetti à un arbre d'extension (A21) de la machine à coudre et un premier ventilateur (12) situé sur ledit manchon ;
un rotor (11) que supporte ledit manchon rotatif (10) ;
un boîtier (20A) comprenant une partie du corps principal (21) qui définit une chambre et qui comporte un passage s'étendant axialement (25A) situé à une extrémité fermée de celui-ci, à travers lequel s'étend le manchon (10) ;
un élément de guidage (30A) qui, en cours d'utilisation, est assujetti à une partie du corps (A2) de la machine à coudre, de sorte qu'il se trouve entre ledit boîtier (20A) et ladite partie du corps (A2), ledit élément de guidage comportant une ouverture (31A) reliée à la partie interne de ladite chambre dans le corps principal, une sortie inférieure (33A) et au moins un premier port d'entrée d'air (32A) ; et
un second ventilateur (50A) situé sur une extrémité libre dudit manchon (10)qui se projette dudit boîtier (20A), de sorte que ledit second ventilateur (50A) soit situé à l'extérieur dudit boîtier (20A) et d'une hotte (60A) recouvrant ledit second ventilateur (50A) et dotée d'une pluralité de deuxièmes entrées d'air (61A),
dans lequel le premier ventilateur est au moins en partie situé ans un espace que définit l'élément de guidage (30A) et l'agencement est tel, qu'en cours d'utilisation, un premier débit d'air aspiré à travers le au moins un premier port d'entrée d'air (32A) par ledit premier ventilateur (12) passe par l'ouverture (31A) pour refroidir la partie du corps (A2) et est expulsé à travers la sortie inférieure (33A) et un second débit d'air aspiré à travers les deuxièmes entrées d'air (61A) par ledit second ventilateur (50A) est dirigé vers ledit boîtier (20A) pour refroidir la partie interne du boîtier (20A)et
dans lequel ledit second débit d'air est séparé dudit premier débit d'air.

7. Machine à coudre selon la revendication 6, dans lequel le su moins un premier port d'entrée d'air (32A) de l'élément de guidage (30A) est recouvert d'une plaque (321A) et ladite plaque (321A) comporte une pluralité de trous d'aération disposés de sorte que ledit air aspiré à travers ledit au moins un premier port d'entrée d'air (32A) passe d'abord à travers les trous d'aération.

8. Machine à coudre selon la revendication 8, dans lequel le au moins une première entrée d'air (32A) comprend une entrée d'air définie dans un renfoncement dans un côté de l'élément de guidage (30A) et ladite plaque (321A) recouvre ladite entrée d'air.

9. Appareil d'entraînement selon soit la revendication 6 soit la revendication 7, soit la revendication 8, dans lequel la hotte (60A) et le boîtier (20A) sont configurés pour prévoir un espace entre le boîtier (20A) et la hotte (60A) moyennant quoi, en cours d'utilisation, ledit second débit d'air aspiré à travers lesdites deuxièmes entrées d'air (61A) par ledit second ventilateur (50A) peut circuler sur la partie externe dudit boîtier (20A) pour au moins en partie refroidir la partie interne du boîtier (20A).
